# EUROPEAN PATENT SPECIFICATION

(11) **EP 1 635 297 B1**
(45) Date of publication and mention of the grant of the patent: **13.06.2012**
(21) Application number: 03817076.7
(22) Date of filing: 28.07.2003
(51) Int. Cl.: G06T 19/00

(54) **3-DIMENSIONAL GRAPHICS DATA DISPLAY DEVICE**
VERFAHREN ZUR 3DIMENSIONALEN GRAPHISCHEN DARSTELLUNG
DISPOSITIF D'AFFICHAGE DE DONNEES GRAPHIQUES TRIDIMENSIONNELLES

(30) Priority: 30.05.2003 JP 2003156074
(43) Date of publication of application: 15.03.2006
(73) Proprietor: Lattice Technology, Inc., Tokyo 102-0074 (JP)
(72) Inventor: Toho, Masato; c/o Lattice Technology, Inc.,, Tokyo 102-0074 (JP); Harada, Tsuyoshi; c/o Lattice Technology, Inc.,, Tokyo 102-0074 (JP); Seki, Makito; c/o Lattice Technology, Inc.,, Tokyo 102-0074 (JP); Yamada, Tomohiro; c/o Lattice Technology, Inc.,, Tokyo 102-0074 (JP)
(74) Representative: Dunleavy, Kevin James
(86) International application number: PCT/JP2003/009527
(87) International publication number: WO 2004/107271

(56) References cited:
- JP-A- 7 182 542
- US-A- 6 072 498
- STEVEN B. COMBS: "Fundamentals of AutoCAD" 2000, PRENTICE HALL , NEW JERSEY, USA , XP002503887 * page 72 - page 75 *

## Description

### FIELD OF THE INVENTION

This invention relates to an apparatus for displaying three-dimensional graphics data. In particular, it relates to an apparatus that can save and restore the statuses of desired three-dimensional graphics displays.

### BACKGROUND OF THE INVENTION

Three-dimensional graphics data are created by CAD (Computer Aided Design), CG (Computer Graphics) and the like. Such three-dimensional graphics data have recently been used in diverse areas as engineering data and are expected to be used even more in the near future.

Three-dimensional graphics data comprises data expressing three-dimensional shapes, surface colors, properties, etc. Shapes are expressed using polygon data and curved surface data. Surface colors and properties are expressed by data consisting of RGB (Red, Green, Blue) values, specular, shininess and transparency and the like, which are called "materials". In place of materials, two-dimensional image data can be used, which is called "a texture". When using a texture, it is necessary to specify a position and a magnification for pasting a two-dimensional image onto a three-dimensional surface.

Two-dimensional display devices are generally used in computer systems where aforementioned three-dimensional data cannot be displayed directly. For this reason, in a three-dimensional data display apparatus, a processing called rendering using display parameters to specify the three-dimensional shape data and its display state is performed to create two-dimensional data and the two-dimensional data created is then output on the display device to display three-dimensional data.

Generally, rendering is a processing for creating two-dimensional data or images (projection conversion processing) from the three-dimensional graphics data according to how a three-dimensional shape expressed by this data looks like when it is viewed from a specific position in a specific direction. When performing a rendering, viewing positions and directions (may be referred to as a camera), illumination and other conditions must be provided besides the three-dimensional graphics data (thereinafter, referred to as a model). These conditions are generally called display parameters.

A projection conversion process calculates at what position all the shape data included in the three-dimensional graphics data can be seen on the screen when viewed from a viewing position based on the coordinate values of the shape data and the group configuration information, and converts the result to two-dimensional data along the coordinates on the screen.

At the end of the projection processing, graphics data appears on the projected plane. Processes such as removal of the hidden surface, shading, texture mapping and the like are applied to the data above to obtain the final two-dimensional data. In order to display three-dimensional data, a set of display parameters for determining the display state is needed in addition to the three-dimensional model which is the display subject.

Therefore, even with the same three-dimensional data, a completely different display appears if the parameters constituting this set of display parameters are changed. A three-dimensional display system uses this function to change the display state of three-dimensional data by changing the display parameters through a user's operation to implement an operation of three-dimensional data. For example, if a viewing position is moved up and down or left to right by operating the mouse, the user experiences that the three-dimensional model is moved (Pan); if a viewing position is moved closer to the model, the user experiences that the three-dimensional model is enlarged (Zoom in); or if a viewing position is moved away, the user experiences that the three-dimensional model is reduced (Zoom out). Moreover, if a viewing position moves in a circular motion around the model to change the viewing direction based on the movement rate, the user experiences that the model is rotating.

As mentioned above, continuously moving the viewing position can change the display parameters to provide the users any operation of the three-dimensional model.

As described above, the display parameters are determined when moving the viewing position continuously through operation of the mouse while the three-dimensional graphics are being displayed. Accordingly, it is difficult to obtain a specific display state only by just setting the desired display parameters, without operations on the three-dimensional graphics. This is because the display parameters are correlated with each other such that transformation occurs with mutual relationships, based on the viewing positions. As a result, it is difficult for the users to set up the desired display parameters to restore the original display state after the original display state has been altered to another display state.

Generally, there is an operation called UNDO or Cancel as an operation for restoring the original state, but UNDO only cancels an operation and the operations must be reversed one at a time. In addition, the display state that can be saved is limited to a series of operational states. Since the records of UNDO are saved on a stack that is a temporary storage area, when the display program ends, the function to restore the display can no longer be operated.

As another method, a program can be created such that the display parameters can be switched as instructed by the users. For example, viewing positions and directions that are display parameters are input as numerical values, and the numerical inputs are set as display parameters so that the displays can be switched by the program. The drawback of this method is that numerical values such as coordinate values must be input in order to operate the program, requiring mathematical knowledge of the three-dimensional model.

It is also possible that visual coordinates for the specific position of the three-dimensional shape including front, rear, left, right, up and down and its directions are stored in advance in the program and when the users select one choice from front, rear, left and right to set up the coordinates and directions that are predetermined, they can be switched to a specific display state. However, according to this method, only a display state from a pre-determined direction can be set up, but a display state based on the user's discretion cannot be set up.

Also, a problem is that the display parameters to be switched by the users are diverse, For example, in addition to viewing positions and directions, they may include selecting for whether or not to display by shading or to display by line drawing, whether or not to display a part of the three-dimensional shape, etc.

In view of the above circumstances, when displaying three-dimensional graphics data, the present invention provides a three-dimensional data display apparatus that easily saves the entire or part of the display state of the graphics and that can select and restore when instructed by the users

U.S. Patent no. 6,072,498 (Brittain et al.) discloses an adaptive degradation system for selectively degrading the quality of rendering a scene, in which one of several possible rendering levels is selected by the system based on the minimum scene refresh rate or animation redraw rate selected by a user. Examples of rendering levels and rendering options are shown in Figs. 3a-3b of this patent.

### SUMMARY OF THE INVENTION

According to a first aspect of the present invention in order to circumvent the above problems, there is provided an apparatus for displaying three-dimensional graphics data display characterized by having, (a) a three-dimensional graphics data retaining means for retaining three-dimensional graphics data; (b) a state storing means for storing a plurality of sets of display parameters for displaying the three-dimensional graphics data on a two-dimensional display, wherein each of the plural sets of display parameters defines a different display state of the three-dimensional graphics data; (c) a view switching means for a user to select one set of display parameters from said plural sets of display parameters; (d) a display parameter retaining means for retaining a user selected set of display parameters; and (e) a rendering processing means for processing the three-dimensional graphics data using said user-selected set of display parameters to output data rendered three-dimensional graphics in a display state defined by said user-selected set of display parameters on a main window in a manipulatable state, which allows the user to manipulate the display state of said three-dimensional graphics on the screen, wherein manipulation of the display state of the three-dimensional graphics on the main window changes values of said user-selected set of display parameters retained by said display parameter retaining means and wherein upon receiving a state storing command from the user, said state storing means causes the rendering processing the three-dimensional graphics having the changed values and stores the result of this processing as two-dimensional data having said changed values of said one set of display parameters and said view switching means displays said two-dimensional data in a sub-window for a user to select.

In the case where the values of the set of display parameters retained in the display parameter retaining means is changed, in accordance with a user's operation, said rendering processing means executes a rendering using the values after the change, and reflects the user's operation via display on the display monitor.

According to the above configuration, when displaying three-dimensional graphics data, an entire or a portion of the display state of the graphics is easily saved, and the users can select and restore according to his instruction.

According to one embodiment of the present invention, this apparatus displays, on the screen, a main window for displaying said three-dimensional graphics in an operationally enabled manner, and a sub-window for displaying the two-dimensional data related to the state storing. This view switching means preferably displays replaces the two-dimensional data displayed in said main window, with a result of the rendering process using said selected set of display parameters.

According to the above configuration, by selecting a sub-window, three-dimensional graphics operationally enabled in a main window can be reproduced.

The view switching means can generate another main window and display in said other main window in an operationally enabled manner, two-dimensional data obtained from rendering processing using the display parameters related to selection by said user.

According to another embodiment of the present invention, the state storing means stores the two-dimensional data along with links to said each set of display parameters that is used to render the two-dimensional data. In this case, when receiving said user's state storing command, said state storing means preferably causes the rendering processing means to execute another rendering processing, and saves the result of the rendering processing as said two-dimensional data. Moreover, the state storing means preferably has an output resolution changing means for changing the output resolution of the two-dimensional data of said rendering processing means.

According to yet another embodiment of the present invention, this apparatus further comprises an updating means that invokes a rendering process after a change is made to the three-dimensional data retained in said three-dimensional graphics data retaining means, in order to generate two-dimensional data using each set of display parameters stored in said state storing means and the changed three-dimensional graphics data, and replaces the two-dimensional data stored in said state storing means with the result of this rendering.

According to yet another embodiment of the present invention, the state storing means copies and stores a set of display parameters that is retained in the display parameter retaining means when the user issues a state storing command In this case, the state storing means preferably stores, as said set of display parameters, all display parameters necessary for rendering the three-dimensional graphics data, or it can preferably save only a part of the display parameters necessary for rendering the three-dimensional graphics data.

As part of the display parameters saved in the state storing means, the following and the like can preferably be selected, depending on the purposes:
- All or part of: a viewing position and a direction of the three-dimensional graphics data, an operation mode, a coordinate system, and a projection method for the three-dimensional data.
- a visibility of faces, edges, and vertices included in the three-dimensional graphics data, and a flag to indicate if hidden line elimination is applied
- a visibility of parts constituting the three-dimensional graphics data.
- a state of selection of parts constituting the three-dimensional graphics data.
- position information, consisting of movement, rotation and zooming parameters of parts constituting the three-dimensional data.
- a flag for cross-sectioning, and a position and direction of a cross-sectioning plane.
- materials and textures showing colors and patterns of surfaces of the three-dimensional data.

Furthermore, in the case where materials or textures are used as part of the display parameters saved in said state storing means, it is preferable for samples of the material or texture to be saved as said two-dimensional data, and for the three-dimensional graphics to be reproduced by selecting such samples.

According to another embodiment of the present invention, said three-dimensional graphics data retains a plurality of sets of display parameters and an identifier is attached to each set of display parameters, and said state storing means saves said identifiers as said set of display parameters.

According to another embodiment of the present invention, said state storing means stores a plurality of three-dimensional graphics data, and said view switching means sets, in said three-dimensional graphics data retaining means, one of the three dimensional graphics data saved in said state storing means.

According to another embodiment of the present invention, the state storing means saves a plurality of three-dimensional part data or a group of parts data, and said view switching means adds one of the three-dimensional parts data or the group of parts data saved in said state storing means, to the three-dimensional graphics data retained in said three-dimensional graphics data retaining means, or replaces a part of the three-dimensional graphics data with one of the three dimensional parts data or the group of parts data saved in said state storing means.

### BRIEF DESCRIPTION OF THE DRAWINGS

FIG. 1 is a block diagram showing a System 1 concerning the embodiments of this invention.
FIG. 2 is an overview of the structure of a printer three-dimensional graphics data.
FIG. 3 is a flowchart showing the processes in a general rendering processing.
FIG. 4 is a view showing an example of the monitor screen.
FIG. 5 is a view showing an example of the monitor screen.
FIG. 6 is a view showing an example of the monitor screen.
FIG. 7 is a flowchart showing operations while saving the state.
FIG. 8 is a chart showing a table in the database.
FIG. 9 is a flowchart showing the processes of rendering processing in this invention.
FIG. 10 is a chart showing an example of a monitor screen concerning a modified example of this invention.
FIG. 11 is a flowchart showing the processes of an update processing.
FIG. 12 is a chart showing an example of the monitor screen concerning a modified case of the present invention.
FIG. 13 is a block diagram showing a configuration of the state storing means.
FIG. 14 is diagram showing an example when only "a display state" that is a part of the display parameters is modified.
FIG. 15 is a diagram showing an example when changing only "the viewing position and direction", which is a part of the display parameters.
FIG. 16 is a diagram showing an example when changing only "the display or non-display of the parts", which is a part of the display parameters.
FIG. 17 is a diagram showing an example when changing only a shading display and wire display, which is a part of the display parameters.
FIG. 18 is a diagram showing an example when changing "the selected state of parts", which is a part of the display parameters.
FIG. 19 is a diagram showing an example when changing "the positions and directions of the cross-sectional face of the three-dimensional graphics data", which is a part of the display parameters.
FIG. 20 is a block diagram showing another example of the present invention.
FIG. 21 is a block diagram showing another example of the present invention.

### DETAILED DESCRIPTION OF THE PREFERRED EMBODIMENTS

Embodiments of the present invention are described below with reference to the accompanying drawings to facilitate understanding of the present invention.

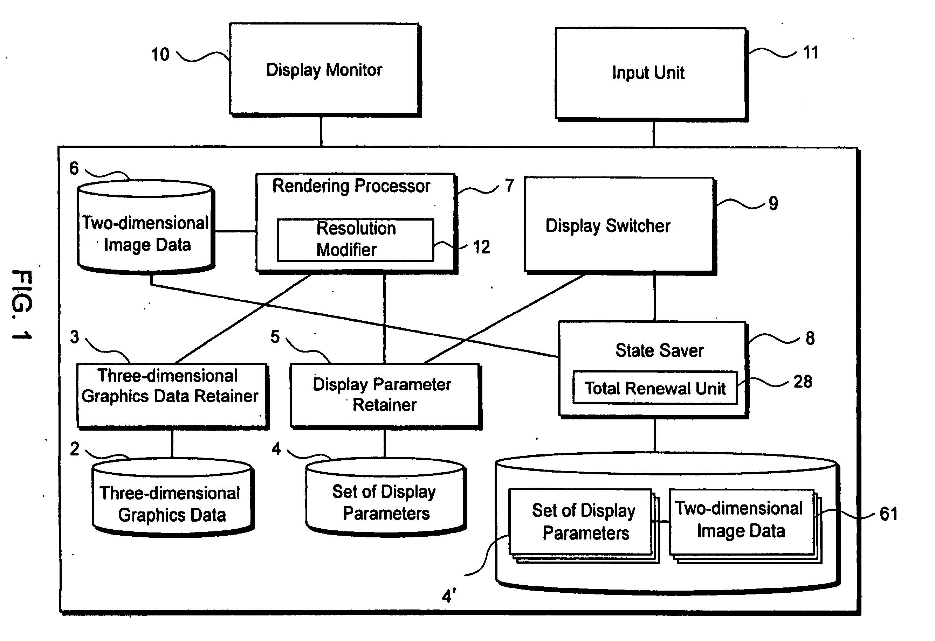

FIG. 1 is a block diagram showing a system 1 according to one embodiment. This system 1 comprises a three-dimensional graphics data retaining means 3 that retains three-dimensional graphics data 2; a three-dimensional display parameter retaining means 5 that retains a set of display parameters 4 for displaying the aforementioned three-dimensional graphics data 2; a rendering processing means 7 that performs rendering processing based on the aforementioned three-dimensional graphics data 2 and the set of display parameters 4 to output a two-dimensional image data 6 for displays on the screen; a state storing means 8 that saves a copy 4' of the set 4 of display parameters retained in the display parameter retaining means 5 and a copy 6' of the two-dimensional image data 6 outputted from the rendering processing means 7, based on a state save instruction by the user, and a view switching means 9 that sets the set 4' of the three-dimensional display parameters saved in the state storing means 8_in the display parameter retaining means 5 and that makes a re-rendering processing at the rendering processing means 7 using the set 4' of the display parameters, based on a display switch instruction from the user.

The system 1 comprises a computer system having CPU, memory and the like that are not shown, and the aforementioned constituent elements 1 through 9 represent modules of a computer software program installed in a definite area allocated in a storage device, such as a hard disk drive not shown in the figure, in the computer system. The program is loaded in the memory and executed by the CPU to be configured to function as a constituent element of the present invention.

In addition, a display monitor 10 is connected to this system 1 in order to display two-dimensional image data 6 rendered and outputted by the rendering processing means 7. Moreover, the view switching means 9 is operated according to the input command from the input device 11, such as a keyboard and mouse that are connected to the system 1.

The configuration of the aforementioned constituent elements is described below along with their functions and operations.

The three-dimensional graphics data retaining means 3 reads the three-dimensional graphics data 2 created by CAD and stored in a hard disk into a memory such as RAM to be retained.

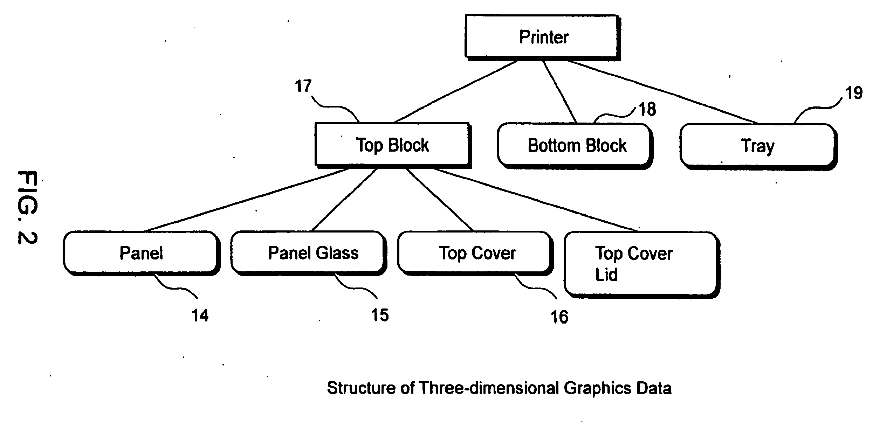

The three-dimensional graphics data 2 used in this embodiment is in XVL (trademark owned by Lattice Technology) format and this format contains plural part shapes in a single three-dimensional graphics data, to express a single graphics data by combining these plural part shapes. This combination of part shapes is expressed by a tree structure as shown in FIG. 2. The shape data of the parts are located at the leaf of the tree structure and other nodes represent groups of the parts.

For example, FIG. 2 shows an overview of the structure of three-dimensional graphics data for a printer. In this figure, "Panel" 14, "Panel Glass" 15, "Top Cover" 16, and "Top Cover Lid" are data displaying the shapes of the parts and "Top Block" 17 is a group integrating these four parts. The group can have group configuration information, display/non-display information, and material and texture data for the entire group. In order to specify the processing and subject groups to be selected, an identifier can be attached to each group. In the examples shown in FIG. 2, identifiers such as "Top Block" 17, "Printer" 18 and "Tray" 19 are used.

The configuration information specifies movement of the shape data of the parts included in the group, rotation and zoom-in and zoom-out, and can be expressed by a two-dimensional matrix. The display/non-display information is a flag indicating whether or not to display a shape that belongs to the group. In the case of non-display, shapes that belong to this group are not displayed. Also, in order to specify the targets of operations on the three-dimensional graphics data, identifiers can be added to the parts or nodes corresponding to the sets of parts.

Said rendering processing means 7 determines display parameters concerning projection display by perspective transformation of the three-dimensional graphics data 2, and performs rendering processing for the three-dimensional graphics data 2 using these display parameters and other display parameters. The configuration of this rendering processing means 7 and its functions are described in detail below.

Generally, the display apparatuses used in computer systems is a two-dimensional display apparatus and three-dimensional data cannot be displayed directly. For this reason, in the display apparatus for three-dimensional data, a processing called rendering processing is performed using the three-dimensional shape data and display parameters for specifying the display state, to create two-dimensional image data 6. The two-dimensional image data created is output in the display apparatus to perform expression of the three-dimensional graphics.

Rendering processing was described as an example in "Computer Graphics PRINCIPLES AND PRACTICE, SECOND EDITION" (ISBN 0-201-12110-7).

In addition, the rendering processing means 7 has a resolution changer12 for modifying the resolution according to the purposes of the output of the two-dimensional image data 6. As will be described in detail below, the resolution changer12 is configured to generate and output two-dimensional images with a resolution either lower or higher than the predetermined resolution, when generating the two-dimensional image data 6 with the objective of storing the display state.

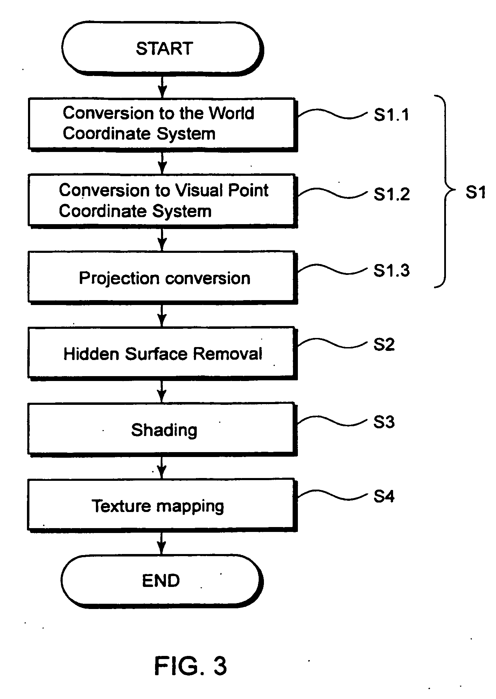

The rendering processing in the rendering processing means 7 generally comprises the processing steps as shown in FIG. 3. Each step is described briefly below.

"Rendering" is a process of creating two-dimensional graphics data or images according to how the three-dimensional shapes expressing the data are viewed from specific positions and directions, in relation to the three-dimensional graphics data 2.

In rendering, initially a projection conversion processing (Step S1) is performed. To perform rendering, a viewing position and its direction (sometimes called a camera), and illumination and other conditions must be considered as well as the models. These conditions are collectively called display parameters.

The projection conversion is to calculate where all shape data included in the three-dimensional graphics data can be seen on the screen from the viewing position based on the coordinate values of the shape data and the configuration information of the group, and converting them to coordinates on the screen.

In perspective conversion, a coordinate system of the shapes is converted to a single coordinate system (a world coordinate system) (Step S1.1). This conversion is calculated by applying the matrix showing the configuration information of the group to all the coordinate values included in the shape data.

Subsequently, the information on the coordinate values of the parts expressed by the world coordinate system is converted to data in the viewing coordinate system using the viewing position and the values of directions in the world coordinate system (S 1.2). Once all the coordinate values in the three-dimensional graphics data are converted to the viewing coordinate system, projection conversion is performed next.

In order to perform projection conversion, a projection plane is set in a space and the position on the projection plane is calculated according to the projection method (Step S1.3).

There are two kind of the projection methods: parallel projection and perspective projection. Parallel projection is a method of processing projection conversion when the viewpoint is assumed to be located infinitely far. On the other hand, perspective projection is a processing for projecting points in space on the projection plane from a viewpoint located at a limited distance.

As the result of projection processing, graphics data on the projection plane are obtained. Various processing including hidden surface removal (Step S2), shading (Step S3) and texture mapping (Step S4) are applied to these data to obtain the final two-dimensional data.

A process of hidden surface removal is processing to remove hidden surfaces that are hidden behind other shapes, from the current viewing position. As this processing method, a Z buffer method can be used. The Z buffer method is a processing carried out using a work area called the Z buffer and determining the Z order of pixels of each polygon so that the hidden surfaces can be removed accurately.

Shading is processing for determining colors on various surfaces with consideration of the position of a light source, intensity, color and angle of the surface, using light source data defined in the three-dimensional graphics data and material data added to the shapes and groups.

Texture mapping is processing for expressing patterns and textures of the material surface that cannot be expressed by shading, which involves processing to place image data on the surface of three-dimensional graphics data.

As described above, a set of parameters for determining the display state is necessary in addition to the three-dimensional model that becomes the subject of the display, in order to display three-dimensional data.

A set of the display parameters comprises the following parameters, as well as the parameters shown above.
1) Viewing position and its direction for indicating the positions and directions when viewing a three-dimensional model, a coordinate system used by the graphics data, a projection method used for displaying.
2) Display state indicating whether or not to display surfaces, lines or dots.
3) Display or non-display state for the parts indicating whether or not to display the part shapes.
4) Selection state for the parts indicating which parts are selected.
5) Position and direction of cross-section if a cross-section of the three-dimensional model is displayed.
6) Configuration information for the parts indicating quantities of movement of parts, quantities of rotation and quantities of zoom-in and zoom out.

Therefore, even with the same three-dimensional data, a completely different display appears if the parameters constituting this set of display parameters are modified. A three-dimensional display system uses this function to change the display state of three-dimensional data by changing the display parameters according to a user's operation to implement an operation of three-dimensional data. For example, if a viewing position is moved up and down or left to right by operating the mouse, the user experiences that the three-dimensional model is moved (Pan); if a viewing position is moved closer to the model, the user experiences that the three-dimensional model is enlarged (Zoom in); or if a viewing position is moved away, the user experiences that the three-dimensional model is reduced (Zoom out). Moreover, if a viewing position moves in a circular motion around the model to change the viewing direction based on the movement amount, the user experiences that the model is rotating.

In this embodiment, a three-dimensional operation can be carried out using an input device 11 such as a mouse, as well as the display monitor 10.

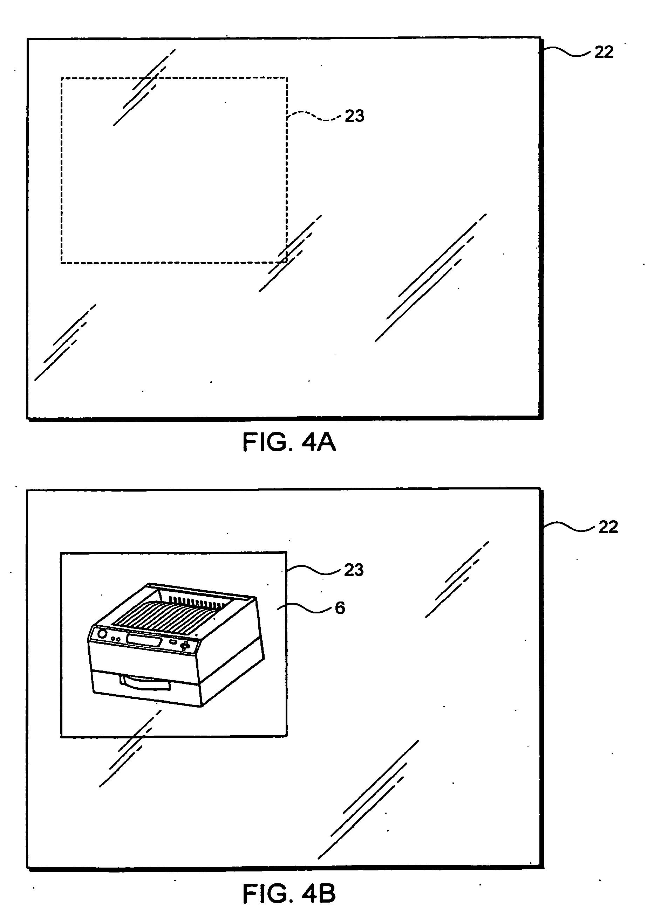

FIG. 4 and subsequent figures show examples of the display screens used in this system.

In this example, a new document 22 is created as shown in FIG. 4A as in the sense when using a regular word processor software, and a main window 23 can be created in order to display and operate three-dimensional graphics in a arbitrary size in the document 22. The example shown in FIG. 4A shows a state using a mouse to specify the size of the new main window, as shown in the location in the figure of the new document. In this case, the positions of the main window 23 and its size can be the predetermined default values.

Subsequently, any three-dimensional graphics data 2 stored in a hard disk is selected and read into the three-dimensional graphics data retaining means 3. The rendering processing means 7 is activated by this action and a three-dimensional model expressed in a two-dimensional image is displayed on the main window 23 using a set 4 of the display parameters (FIG. 4B). In this case, the three-dimensional graphics data 2 is rendered by the default viewing position, materials and textures stored in the XVL format (three-dimensional graphics data).

In this main window 23, the users can rotate the three-dimensional model and proceed with operations such as zoom-in and zoom-out using a mouse. Using the structure of the three-dimensional model in this embodiment, operations such as displaying some of the parts only or disassembly of the model can be carried out. Additionally, other parameters such as textures and materials can be modified.

Whenever the users carry out the aforementioned operations, the values of the set of the display parameters retained in the display parameter retaining means 5 change. When the values change, the rendering processing means 7 performs rendering processing for the three-dimensional graphics data 2 retained in the three-dimensional graphics data retaining means 3 to generate two-dimensional data using the display parameters 4 to be displayed on the main window 23. In this way, the users can specify the display state to be saved.

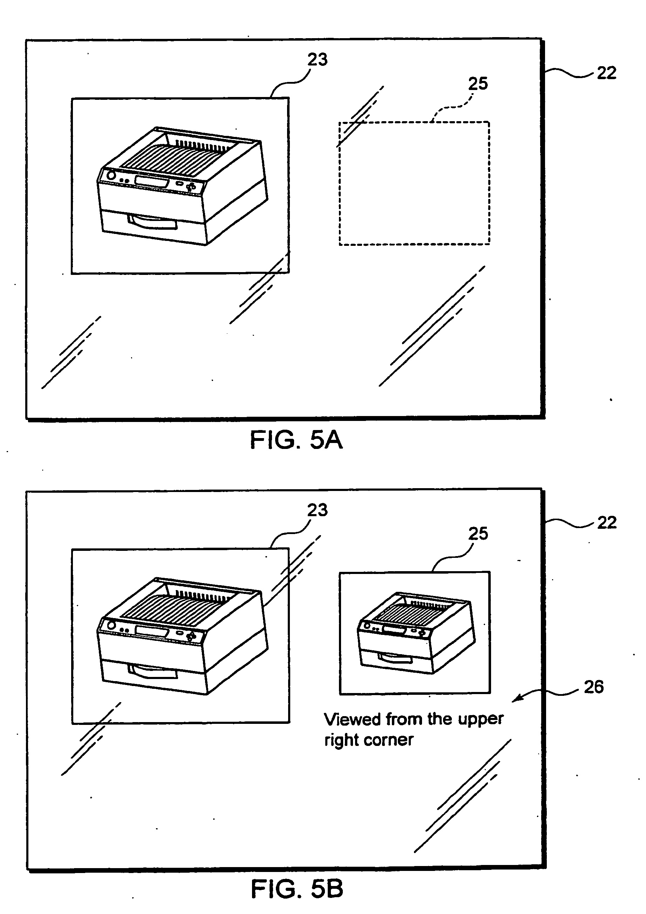

Subsequently, the users execute the state storing command of this system. In this example, the two-dimensional images displayed on the main window 23 are dragged and dropped using a mouse out of the main window 23 so that a sub-window 25 is displayed on the new document (FIG. 5A) and the same images as those above are pasted (FIG. 5B), whereas a copy 4' of the set of display parameters and a copy 6' of the two-dimensional images are then stored in the hard disk by the state storing means 8. In this example, the copy 4' of the set of the display parameters is stored by adding an ID as one record in the database.

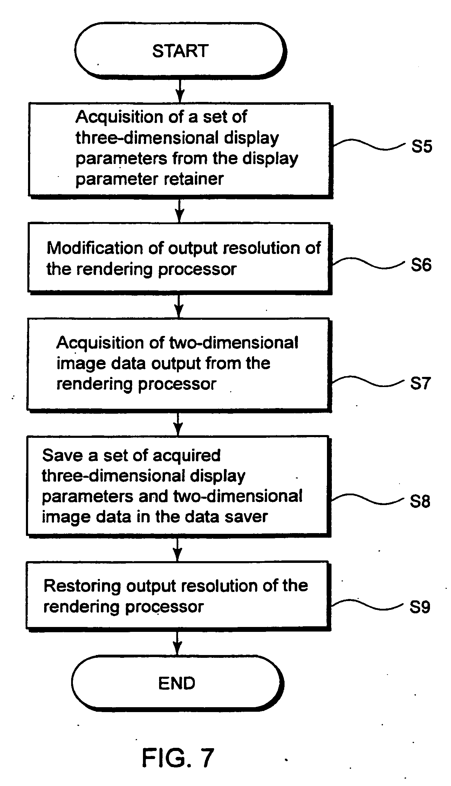

FIG. 7 is a flowchart showing the operations while saving the state.

In this embodiment, once a state storing command is executed, a re-rendering processing is performed using the aforementioned display parameters, and a two-dimensional image is generated having a lower resolution than usual, for saving, to be displayed on the sub-window 25 as well as being stored in the state storing means 8.

That is, with the state storing command, a copy 4' of the three-dimensional display parameters is acquired (Step S5). Subsequently, a changer12 modifies the resolution in the rendering processing means to be set at a smaller value than the resolution used in the regular rendering processing, delivered to the rendering unit (Step S6). Subsequently, once a two-dimensional image data with a lowered resolution is received from the rendering unit (Step S7), this is stored in the hard disk as well as the display parameters (Step S8). In this case, a two-dimensional image is also displayed on the sub-window 25. After the completion of all of this processing, the output resolution is returned to the original resolution in the rendering processing means (Step S9).

If the output resolution is lower than the resolution that is used in the regular rendering processing, as mentioned above, then the amount of two-dimensional data displayed to the users becomes smaller. The advantage is that many more two-dimensional images can be viewed since the display area is reduced on the display.

In contrast, if the output resolution is higher than the resolution used in the regular rendering processing, two-dimensional data with higher image quality can be obtained, which is particularly advantageous for use in printing two- dimensional data.

It is possible to store only the copy 4' of the set of display parameters directly in the hard disk by commanding "state storing" from the menu without creating a sub-window 25. If no sub-window 25 is displayed, one can save only the display parameters without activating the rendering processing means7.

Additionally, a comment can be added to the display parameters to be saved in order to make subsequent selection easier. This comment is also stored as one field of the data base record. Even when saving two-dimensional images as describe above, it is possible to add such a comment. In the Example of FIG. 5B, the title 26 displayed at the bottom of the sub-window 25 can be saved as a comment.

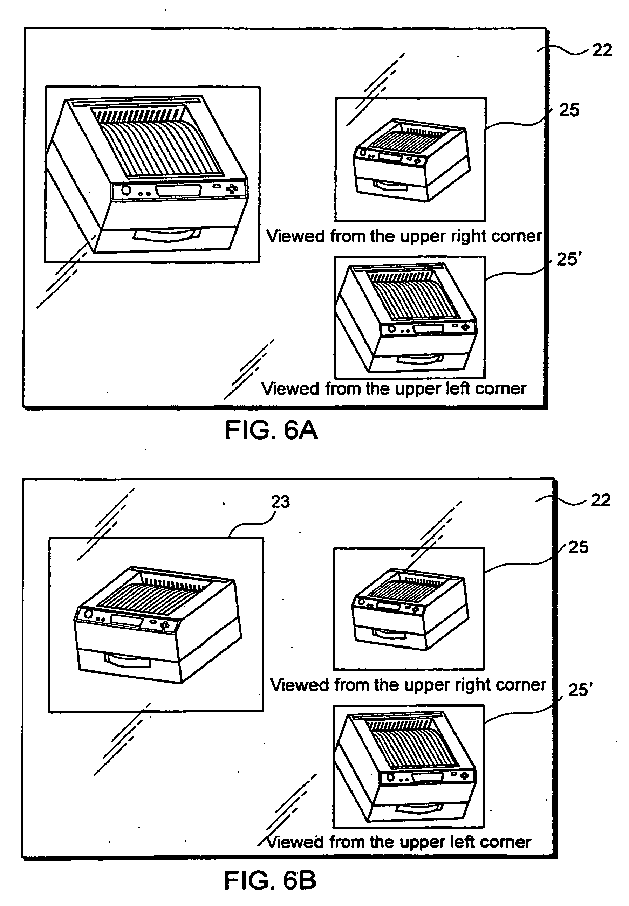

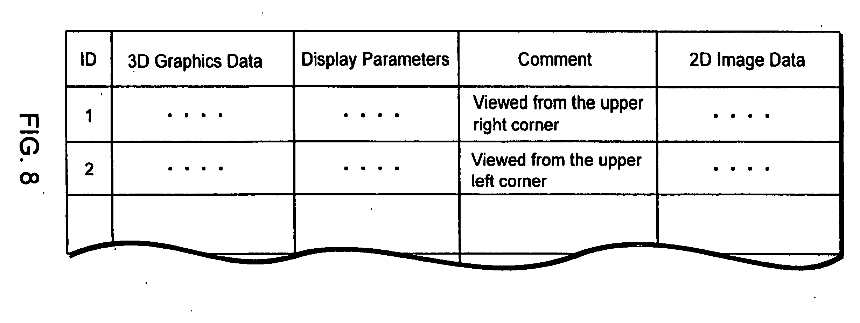

As the users execute the aforementioned state storing while operating three-dimensional graphics on the main window 23, the state storing means 8 stores the copy 4' of the set of display parameters one by one in the aforementioned database along with the ID. FIG. 6A is a diagram showing examples of the displays on the screen, and FIG. 8 shows a table in the database. In FIG. 6A, the image in the main window is rotated from the state shown in FIG. 5B and further zoomed in to be displayed in the main window 23, which is then copied in the sub-window 25' by a drag and drop operation.

In this embodiment, as shown in FIG. 8, two-dimensional image data displayed on the sub-window in FIG. 6A is saved, along with their relationships, to the records of the database.

On the other hand, the view switching means 9 has a function to fetch a set of display parameters from the database stored in the state storing means 8 according to the inputs from the users and to set them in the display parameter retaining means 5. In this example, display parameters can be specified by clicking the selected subwindows 25 and 25' in FIG. 6. For example, if the first sub-window 25 in FIG. 6A is clicked, a set of display parameters that is associated to the window (ID) is fetched from the state storing means 8, then is copied to the memory of the display parameter retaining means 5.

Accordingly, the rendering processing means 7 performs a re-rendering processing using display parameters displayed on the first sub-window 25 and three-dimensional graphics data to display three-dimensional graphics that can be operated on the main window (FIG. 6B). As a result, the users can selectively reproduce any state of display in such a condition that it can be operated in the main window.

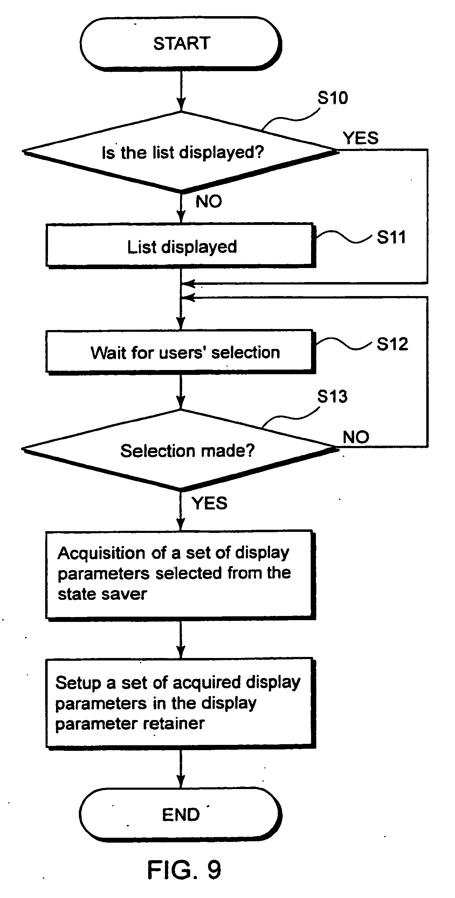

FIG. 9 is a flowchart showing this processing.

Whether the two-dimensional images (sub-window 25) and the data saved by other methods are selectively displayed is determined at Step S10. If not, a user selection list is displayed, to await user selections (Steps S 11, S12 and S 13).

If one of the saved states is selected, a set of display parameters selected is acquired from the state storing means 8 (Step 14). Subsequently, the display parameters are set in the memory of the display parameter retaining means 5 (Step S15). Using these display parameters, rendering processing is performed in the rendering processing means 7 so that three-dimensional graphics are displayed in an operable state in the main window 23.

In this example, a state to be restored from the sub-window 25 is selected; however, one can be selected from the list regardless of the sub-window 25. If images are not stored, the display parameter IDs and a table of comments (part of the table shown in FIG. 8) are displayed in order to make the user's selection easier. If the two-dimensional image data 6' including the aforementioned two-dimensional images are stored in relation to the set 4' of the display parameters, the images can be displayed in a thumbnail format on a screen separate from the new document. Additionally, without being limited to the two-dimensional images, symbols, graphics, character strings or numbers from which a set of display parameters can be recalled from, can also be selected as two-dimensional data.

According to the configuration above, if a set of necessary three-dimensional display parameters is saved in the state storing means 8, the three-dimensional graphics data can be switched instantaneously to the desired three-dimensional display state.

The system concerned in this embodiment has a state storing data integrated updating means 28 in the state storing means 8 of the system of the first embodiment.

The updating means 28 has a function to update the two-dimensional image data saved in the state storing means 8 when the three-dimensional graphics data 2 in the three-dimensional graphics data retaining means 3 is replaced, or modified, to reflect the changes of three-dimensional data.

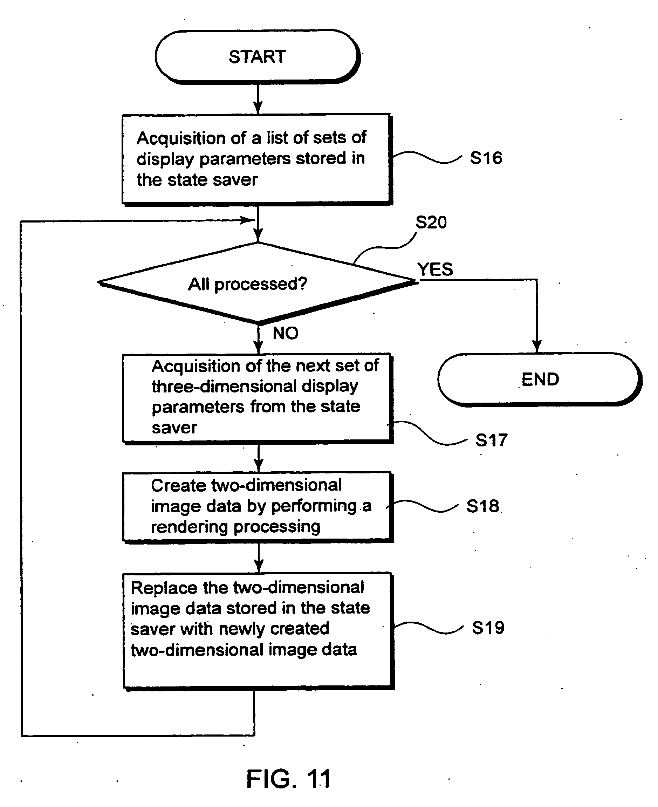

FIG. 11 is a flowchart showing processing in the updating means 28.

Initially, once the aforementioned state storing data integrated updating means 28 receives a data update command (Step S16), it sequentially fetches a set of three-dimensional display parameters saved in the state storing means 8 (Step S17), and a similar rendering processing as mentioned above is executed by applying new three-dimensional graphics data to obtain new two-dimensional image data (Step S18). Subsequently, the two-dimensional image data which was saved corresponding to the set of display parameters used for this processing, is replaced with the new two-dimensional image data obtained by the above-mentioned rendering processing (Step S19). Furthermore, the processing at Steps S17 through S19 are performed for all sets of display parameters stored in the state storing means 8 (Step S20). If such a processing is applied, the updated new two-dimensional image data are also displayed on the new document 22, to update the displays of the sub-window 25.

According to the configuration mentioned above, when the original three-dimensional graphics data is modified, rendering using each set of display parameters is automatically executed based on this, to update the corresponding two-dimensional image data.

The present invention is not limited by the aforementioned one embodiment and it is applicable in various forms within a scope that does not modify the essentials of the present invention.

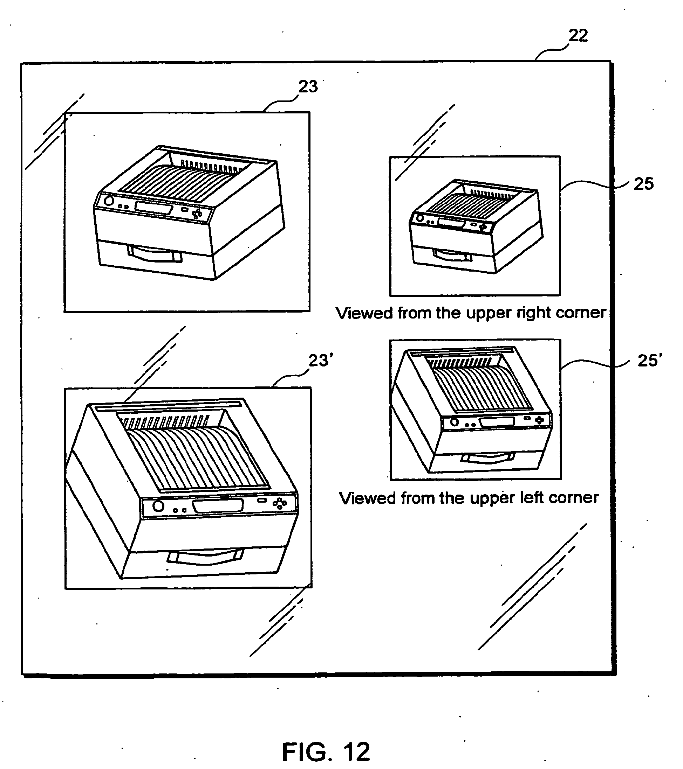

For example, in the aforementioned embodiment, if a switch is instructed to the view switching means 9, the current three-dimensional image shown in the main window 23 is replaced with the three-dimensional image with the specified set of display parameters, but not limited to this action. For example, as shown in FIG. 12, a new second main window 23' is generated in the document 22 in order to display three-dimensional graphics with the specified display parameters. In this example, two main windows 23 and 23' are displayed and images can be operated in both windows.

That is, in this example, if the display switch is indicated by the user, a new three-dimensional graphics display area is created to display three-dimensional data using the specified set of display parameters instead of switching the currently displayed three-dimensional data.

Additionally, three-dimensional images can be displayed on a pop-up window instead of switching the main window in the document. Alternatively, three-dimensional images with specified set of display parameters can be arranged to be popped up only when a display switch is indicated

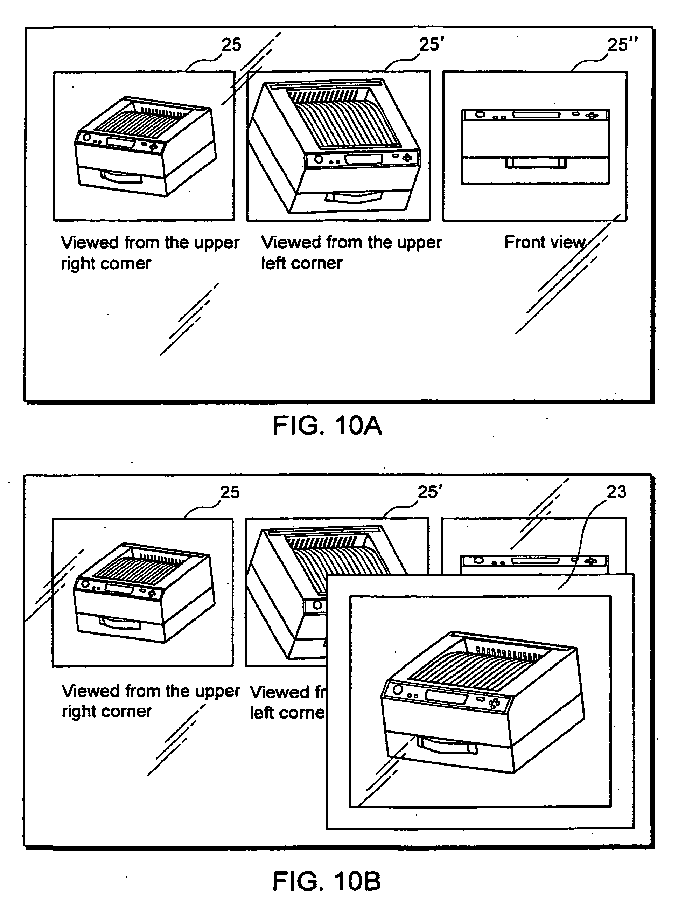

FIGS. 10A and B show this example. In FIG. 10A, only a sub-window is displayed in a thumbnail system so that if one is specified, a three-dimensional image window pops up as shown in FIG. 10B.

This is particularly effective when it is not necessary to display or to operate three-dimensional data on a regular basis or when larger three-dimensional displays are not executed regularly due to restrictions in screen sizes.

When switching the displays in the aforementioned embodiment, all the parameters required for displaying three-dimensional graphics in a two-dimensional display are fetched from the state storing means 8 and are set in the display parameter retaining means 5. However, it is possible for only a portion of the display parameters to be set.

For this reason, the view switching means 9 has a display parameter selector30 for selecting the display parameters to be modified. This display parameter selector30 makes the users select display parameters to be modified and only the display parameters selected (a portion of the set of display parameters) are set in the display parameter retaining means 5.

In the aforementioned embodiment, all the parameters required for the two-dimensional display of three-dimensional graphics are stored in the state storing means 8, but only a portion of the display parameters can also be stored.

In this case, a desired implementation is that only the parameters to be modified are stored in the state storing means 8, while as the common display parameters not needed to be modified, the display parameters stored in the three-dimensional graphics data retaining means 3 are used. Additionally, the common display parameters can be stored in the state storing means 8 separately from the parameters to be modified.

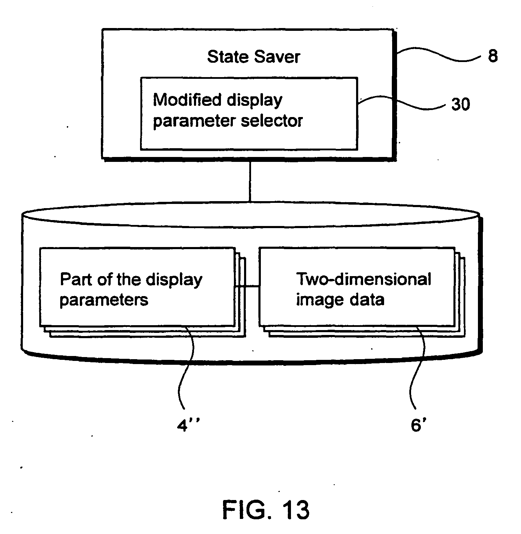

For this reason, the state storing means 8 has a display parameter selector 30 for selecting the display parameters to be modified, as shown in FIG. 13. The display parameter selector 30 makes the users select display parameters to be modified and only the selected display parameters (a portion of the set of display parameters) are stored in the hard disk.

Examples of display parameters to be modified, and examples of the display of cases where such parameters were modified, are presented below.

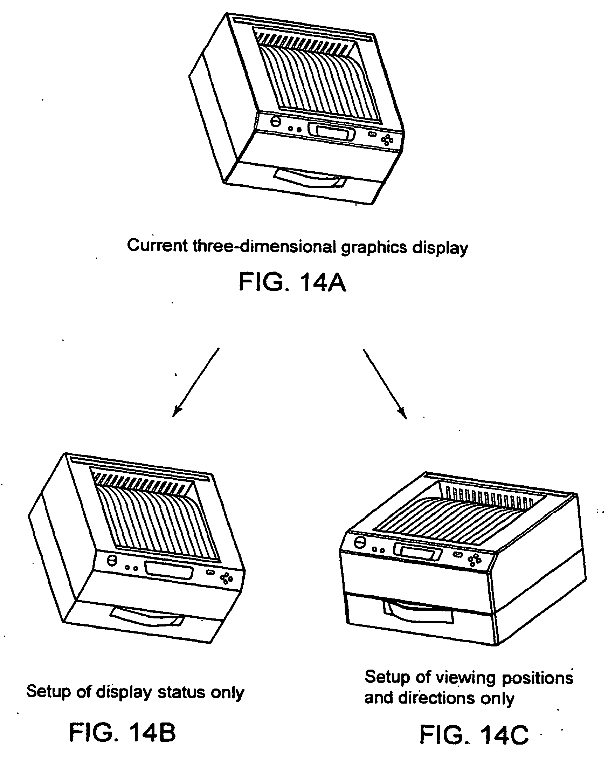

For example, FIG. 14A and B show examples when changing only "the display state" as a part of the display parameters. FIG. 14B shows a state when the display parameter is changed. When only the viewing positions and directions are set, the state changes as shown in FIG. 14C.

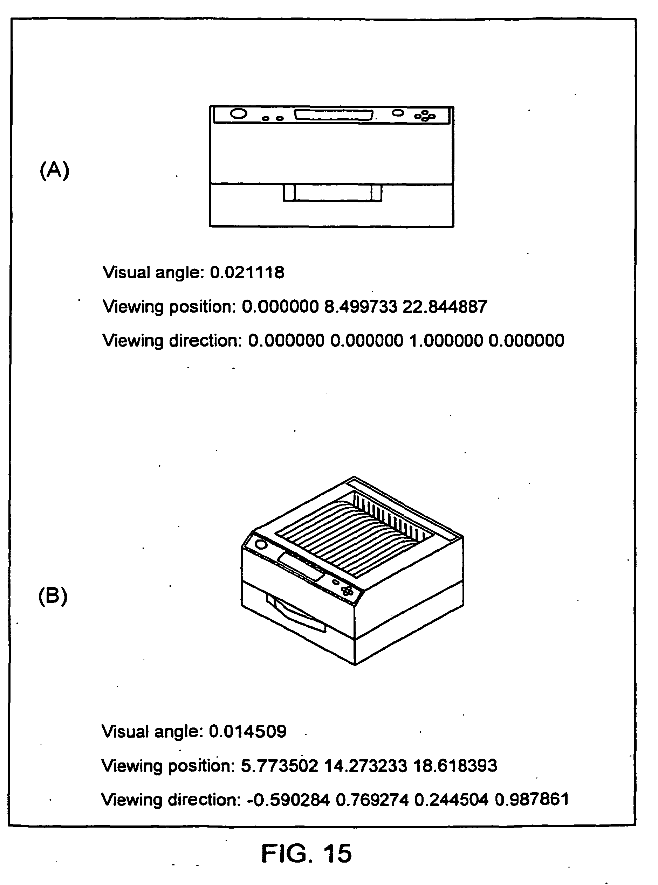

Similarly, FIG. 15A shows an example when changing only "the viewing positions and directions", as part of the display parameters.

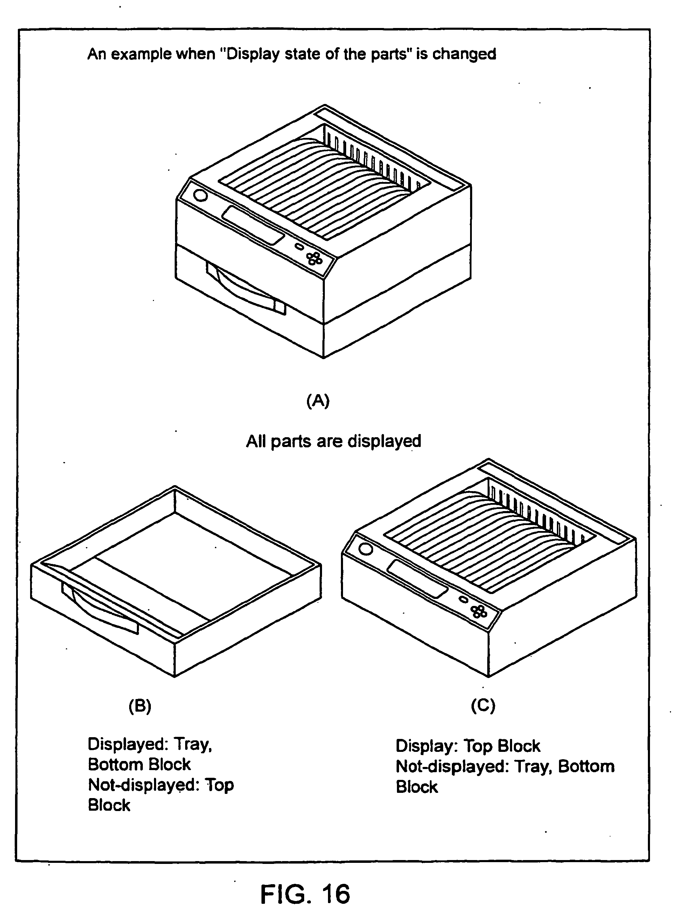

Similarly, FIGS. 16A - C show examples when changing only "the display, non-display of the parts" as a part of the display parameters.

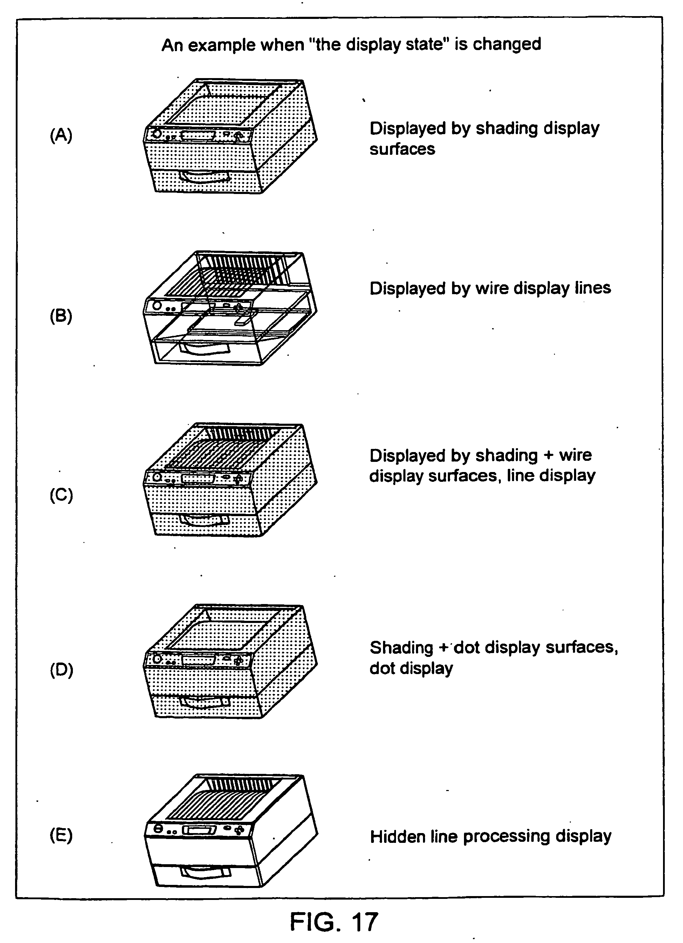

Similarly, FIGS. 17A - E show examples when changing only a shading display, or wire display as a part of the display parameters.

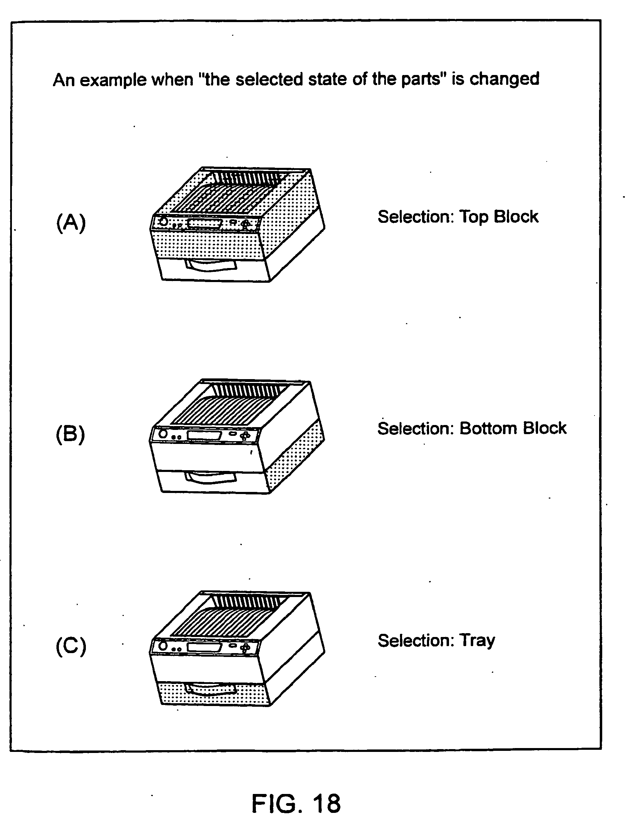

Similarly, FIGS. 18A - C show examples when changing only "the selection state of the parts" as a part of the display parameters.

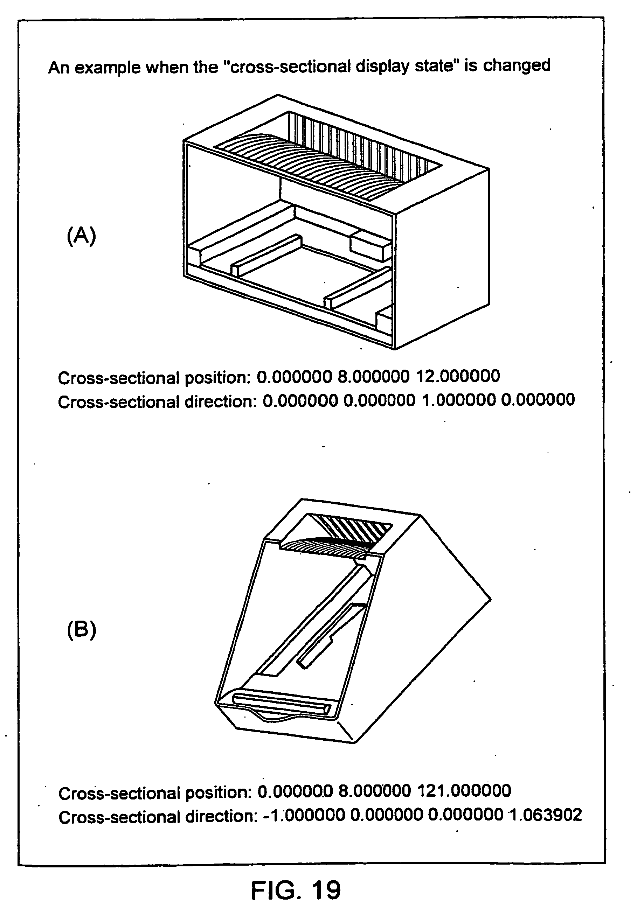

Similarly, FIGS. 19A and B are examples when changing only positions and directions of the cross-section plane of the three-dimensional graphics data.

In the said one embodiment, a set of the display parameters is stored in the state storing means 8, which is stored in the database 2 in the hard disk, but it is not limited by these examples. For example, they can also be stored in said three-dimensional graphics data.

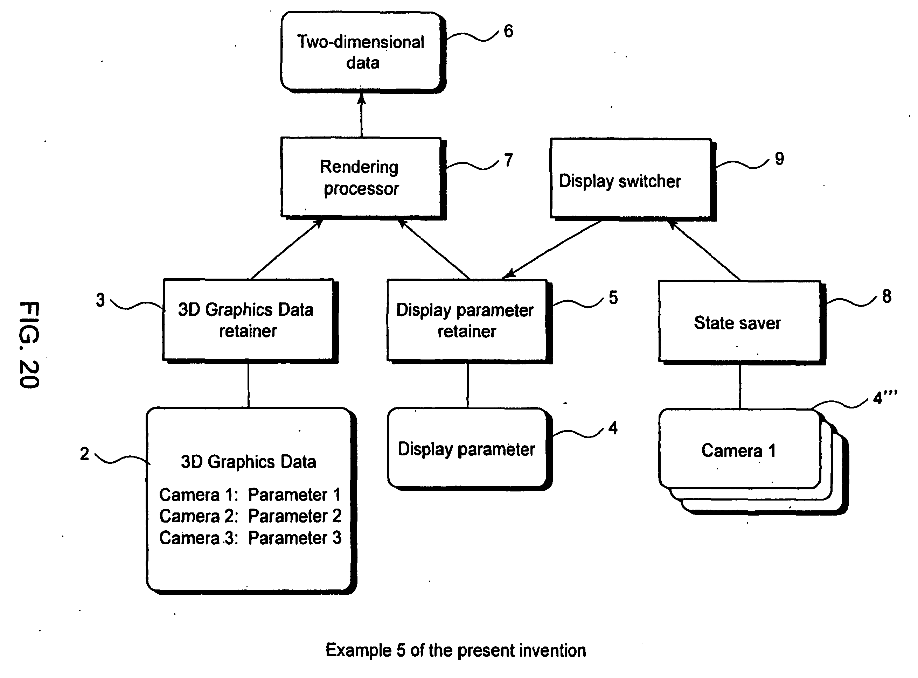

In this case, as shown in FIG. 20, a set of display parameters is stored as Camera 1 - Camera 3 in the three-dimensional graphics data 2. That is, in this case, identifiers 4"' indicating the sets of display parameters that are called Camera 1 - Camera 3 are stored in the state storing means 8 rather than the set of display parameters themselves.

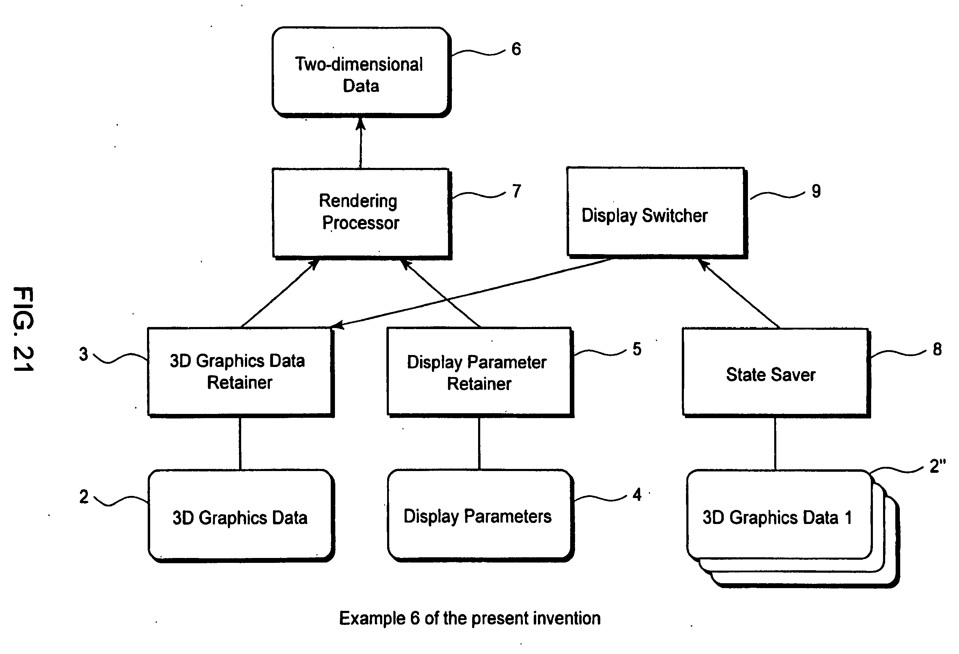

FIG. 21 shows another embodiment of the present invention. Three-dimensional graphics data 2' in XVL format that includes display parameters is stored in the state storing means 8 in place of display parameters. In this case, based on the user input, the view switching means 9 fetches one of the three-dimensional graphics data 2' and stores it in the three-dimensional graphics data retaining means 3. As a result, the three-dimensional display on the main window 23 is changed.

This is particularly effective when investigating or comparing by switching among plural three-dimensional data, while maintaining the angle and size of the three-dimensional displays.

As described clearly above, the present invention provides a three-dimensional data display apparatus with which uses can easily save the entire or a portion of the display state of the three-dimensional graphics data displays, select one of the saved display states, and restore the three-dimensional graphics display.

## Claims

1. An apparatus for displaying three-dimensional graphics data (2) having:
a three-dimensional graphics data retaining means (3) for retaining three-dimensional graphics data (2);
a view switching means (9),
a rendering processing means (7) for performing rendering processing the three dimensional graphics data,
a display parameter retaining means (5)
a state storing means (8) for storing plural sets of display parameters, to be used in displaying said three-dimensional graphics data (2) as a two-dimensional display, wherein each of the plural sets of display parameters defines a different display state of the three-dimensional graphics data (2);
the view switching means (9) permits a user to select one set of display parameters from said plural sets of display parameters;
the display parameter retaining means (5) retains a user selected set of display parameters; and
the rendering processing means (7) processes the three dimensional graphics data (2), using said user-selected set of display parameters to output rendered three-dimensional graphics in a display state defined by said user-selected set of display parameters on a main window (23) in a manipulatable state, which allows the user to manipulate the display state of said three-dimensional graphics on the screen, wherein manipulation of the display state of the three-dimensional graphics on the main window (23) changes values of said user-selected set of display parameters retained by said display parameter retaining means (5)
**characterized in that** upon receiving a state storing command from the user, said state storing means (8) causes the rendering processing means (7) to process the three-dimensional graphics having the changed values and stores the result of this processing as two-dimensional image data together with said changed values of said one set of display parameters, and said view switching means (9) displays said two-dimensional image data in a sub-window (25) for a user to select.

2. The apparatus for displaying three-dimensional graphics data (2) of Claim 1 wherein said rendering processing means (7) also re-executes rendering processing based on the changed values of said one set of display parameters, and outputs the result of the reexecuted rendering processing in said main window (23), reflecting the user's manipulation of the display state of the three dimensional graphics data.

3. The apparatus for displaying three-dimensional graphics data (2) of any one of Claims 1-2 wherein, said state storing means (8) causes said rendering processing means (7) to execute a rendering processing step with display parameters including a lower resolution than a resolution for said rendered three-dimensional graphics to generate said two-dimensional data.

4. The apparatus for displaying three-dimensional graphics data (2) of Claim 1 wherein said view switching means (9) can generate another main window (23) and display the result of the rendering process using a set of display parameters selected by the user, in said other main window (23) in a manipulatable state.

5. The apparatus for displaying three-dimensional graphics data (2) of Claim 1 wherein said state storing means (8) stores, as a set of display parameters, all display parameters necessary for rendering the three-dimensional graphics data (2).

6. The apparatus for displaying three-dimensional graphics data (2) of any one of Claims 1-3 wherein said state storing means (8) stores, as a set of display parameters, a part of the display parameters necessary for rendering the three-dimensional graphics data (2).

7. The apparatus for displaying three-dimensional graphics data (2) of any one of Claims 1-6 wherein the part of the display parameters stored in said state storing means (8) includes all or part of: a viewing position and a direction of the three-dimensional graphics data (2), an operation mode of said display apparatus, and a coordinate system and projection method for the three-dimensional data.

8. The apparatus for displaying three-dimensional graphics data (2) of any one of Claims 1-6 wherein the part of the display parameters stored in said state storing means (8) includes visibility of face, edge, and vertices included in the three-dimensional graphics data (2), and a flag to indicate an application of hidden line elimination.

9. The apparatus for displaying three-dimensional graphics data (2) of any one of Claims 1-6 wherein the part of the display parameters stored in said state storing means (8) includes a visibility of each part constituting the three-dimensional graphics data (2).

10. The apparatus for displaying three-dimensional graphics data (2) of any one of Claims 1-6 wherein the part of the display parameters stored in said state storing means (8) includes a state of selection of parts constituting the three-dimensional graphics data (2).

11. The apparatus for displaying three-dimensional graphics data (2) of any one of Claims 1-6 wherein the part of the display parameters stored in said state storing means (8) includes position information, consisting of movement, rotation and zooming parameters of parts constituting the three-dimensional data.

12. The apparatus for displaying three-dimensional graphics data (2) of any one of Claims 1-6 wherein the part of the display parameters stored in said state storing means (8) includes a flag for cross-sectioning, and a position and direction of a cross-sectioning plane.

13. The apparatus for displaying three-dimensional graphics data of any one of Claims 1-6 wherein the part of the display parameters stored in said state storing means (8) includes materials and textures showing colors and patterns of a surface of the three-dimensional data, and using the materials and textures as two-dimensional data stored by said state storing means (8), and wherein said view switching means (9) sets, in accordance with a user's selection, the materials and textures at the display parameter retaining means (5).

14. The apparatus for displaying three-dimensional graphics data of Claim 1 wherein said three-dimensional graphics data contains a plurality of sets of display parameters and a unique identifier is attached to each set of display parameters, and said state storing means (8) saves said identifier for each set of display parameters.

15. The apparatus for displaying three-dimensional graphics data of Claim 1 wherein said state storing means (8) stores a plurality of three-dimensional graphics data, and said view switching means (9) sets, in said three-dimensional graphics data retaining means (3), one of the three dimensional graphics data saved in said state storing means (8).

16. The apparatus for displaying three-dimensional graphics data of Claim 1 wherein the state storing means (8) stores a plurality of three-dimensional parts data or a group of parts data, and said view switching means (9) uses one of said plurality of three-dimensional parts data or the group of parts data saved in said state storing means (8), to add to or replace a part of, the three dimensional graphics data retained in said three-dimensional graphics data retaining means (3).

## Patentansprüche

1. Eine Vorrichtung für die Anzeige dreidimensionaler graphischer Daten (2) umfassend: ein dreidimensionale graphische Daten beibehaltendes Mittel (3) für die Beibehaltung dreidimensionaler graphischer Daten (2);
ein Ansicht umschaltendes Mittel (9),
ein Rendering verarbeitendes Mittel (7) zur Durchführung von Rendering-Verarbeitung der dreidimensionalen graphischen Daten,
ein Anzeigeparameter beibehaltendes Mittel (5),
ein Zustand speicherndes Mittel (8) für die Speicherung mehrerer Anzeigeparametersätzen zur Verwendung bei der Anzeige besagter dreidimensionaler graphischer Daten (2) als eine zweidimensionale Anzeige,
wobei jeder der mehreren Anzeigeparametersätze einen anderen Anzeigezustand der dreidimensionalen graphischen Daten (2) definiert;
das Ansicht umschaltende Mittel (9) einem Nutzer gestattet, einen Anzeigeparametersatz aus besagten mehreren Anzeigeparametersätzen auszuwählen;
das Anzeigeparameter beibehaltende Mittel (5) einen vom Nutzer ausgewählten Anzeigeparametersatz beibehält; und
das Rendering verarbeitende Mittel (7) die dreidimensionalen graphischen Daten (2) verarbeitet, und zwar unter Verwendung des besagten vom Nutzer ausgewählten Anzeigeparametersatzes für die Ausgabe gerenderter dreidimensionaler Graphiken in einem Anzeigezustand, welcher vom besagten vom Nutzer ausgewählten Anzeigeparametersatz in einem Hauptfenster (23) definiert wird, und zwar in einem manipulierbaren Zustand, welcher es dem Nutzer erlaubt, den Anzeigezustand besagter dreidimensionaler Graphiken auf dem Bildschirm zu manipulieren, wobei die Manipulation des Anzeigezustands der dreidimensionalen Graphiken im Hauptfenster (23) Werte des besagten vom Nutzer ausgewählten Anzeigeparametersatzes ändert, welcher vom besagten Anzeigeparameter beibehaltenden Mittel (5) beibehalten wird,
**dadurch gekennzeichnet, dass** nach Empfang eines Zustand speichernden Befehls vom Nutzer das besagte Zustand speichernde Mittel (8) bewirkt, dass das Rendering verarbeitende Mittel (7) die dreidimensionalen Graphiken, welche die geänderten Werte aufweisen, verarbeitet und das Ergebnis dieser Verarbeitung als zweidimensionale Bilddaten zusammen mit besagten geänderten Werten des besagten einen Anzeigeparametersatzes speichert, und das besagte Ansicht umschaltende Mittel (9) die besagten zweidimensionalen Bilddaten in einem Unterfenster (25) zur Auswahl durch einen Nutzer anzeigt.

2. Die Vorrichtung für die Anzeige dreidimensionaler graphischer Daten (2) gemäß Anspruch 1, wobei das besagte Rendering verarbeitende Mittel (7) ferner auf der Grundlage der geänderten Werte des besagten einen Anzeigeparametersatzes Rendering-Verarbeitung erneut durchführt und das Ergebnis der erneut durchgeführten Rendering-Verarbeitung in besagtem Hauptfenster (23) ausgibt, wobei die vom Nutzer am Anzeigezustand der dreidimensionalen graphischen Daten vorgenommene Manipulation reflektiert wird.

3. Die Vorrichtung für die Anzeige dreidimensionaler graphischer Daten (2) gemäß irgendeinem der Ansprüche 1-2, wobei das besagte Zustand speichernde Mittel (8) das besagte Rendering verarbeitende Mittel (7) veranlasst, einen Rendering-Verarbeitungsschritt mit Anzeigeparametern durchzuführen, einschließlich einer niedrigeren Auflösung als die Auflösung für besagte gerenderte dreidimensionale Graphiken zur Generierung besagter zweidimensionaler Daten.

4. Die Vorrichtung für die Anzeige dreidimensionaler graphischer Daten (2) gemäß Anspruch 1, wobei das besagte Anzeige umschaltende Mittel (9) ein anderes Hauptfenster (23) generieren und das Ergebnis des Rendering-Prozesses unter Verwendung eines vom Nutzer ausgewählten Anzeigeparametersatzes im besagten anderen Hauptfenster (23) in einem manipulierbaren Zustand anzeigen kann.

5. Die Vorrichtung für die Anzeige dreidimensionaler graphischer Daten (2) gemäß Anspruch 1, wobei das besagte Zustand speichernde Mittel (8) alle für das Rendering der dreidimensionalen graphischen Daten (2) erforderlichen Anzeigeparameter als einen Anzeigeparametersatz speichert.

6. Die Vorrichtung für die Anzeige dreidimensionaler graphischer Daten (2) gemäß irgendeinem der Ansprüche 1-3, wobei das besagte Zustand speichernde Mittel (8) einen Teil der für das Rendering der dreidimensionalen graphischen Daten (2) erforderlichen Anzeigeparameter als einen Anzeigeparametersatz speichert.

7. Die Vorrichtung für die Anzeige dreidimensionaler graphischer Daten (2) gemäß irgendeinem der Ansprüche 1-6, wobei der im besagten Zustand speichernden Mittel (8) gespeicherte Teil der Anzeigeparameter alle oder Teile der Folgenden umfasst: eine Sichtposition und eine Richtung der dreidimensionalen graphischen Daten (2), einen Betriebsmodus der besagten Anzeigevorrichtung und ein Koordinatensystem und eine Projektionsmethode für die dreidimensionalen Daten.

8. Die Vorrichtung für die Anzeige dreidimensionaler graphischer Daten (2) gemäß irgendeinem der Ansprüche 1-6, wobei der im besagten Zustand speichernden Mittel (8) gespeicherte Teil der Anzeigeparameter Folgendes umfasst: Sichtbarkeit der in den dreidimensionalen graphischen Daten (2) enthaltenen Vorderfläche, Kante und Eckpunkte und ein Kennzeichen zum Hinweis auf eine Anwendung zur Eliminierung verborgener Linien.

9. Die Vorrichtung für die Anzeige dreidimensionaler graphischer Daten (2) gemäß irgendeinem der Ansprüche 1-6, wobei der im besagten Zustand speichernden Mittel (8) gespeicherte Teil der Anzeigeparameter eine Sichtbarkeit jedes die dreidimensionalen graphischen Daten (2) konstituierenden Teils umfasst.

10. Die Vorrichtung für die Anzeige dreidimensionaler graphischer Daten (2) gemäß irgendeinem der Ansprüche 1-6, wobei der im besagten Zustand speichernden Mittel (8) gespeicherte Teil der Anzeigeparameter einen Auswahlzustand von die dreidimensionalen graphischen Daten (2) konstituierenden Teilen umfasst.

11. Die Vorrichtung für die Anzeige dreidimensionaler graphischer Daten (2) gemäß irgendeinem der Ansprüche 1-6, wobei der im besagten Zustand speichernden Mittel (8) gespeicherte Teil der Anzeigeparameter Positionsinformationen umfasst, welche aus Bewegungs-, Drehungs- und Zoomparametern von die dreidimensionalen graphischen Daten (2) konstituierenden Teilen umfasst.

12. Die Vorrichtung für die Anzeige dreidimensionaler graphischer Daten (2) gemäß irgendeinem der Ansprüche 1-6, wobei der im besagten Zustand speichernden Mittel (8) gespeicherte Teil der Anzeigeparameter ein Kennzeichen für Querschnittserstellung und eine Position und Richtung einer Querschnittserstellungsebene umfasst.

13. Die Vorrichtung für die Anzeige dreidimensionaler graphischer Daten gemäß irgendeinem der Ansprüche 1-6, wobei der im besagten Zustand speichernden Mittel (8) gespeicherte Teil der Anzeigeparameter Materialien und Texturen umfasst, welche Farben und Muster einer Oberfläche der dreidimensionalen Daten zeigen, und die Materialien und Texturen als von besagtem Zustand speichernden Mittel (8) gespeicherte zweidimensionale Daten verwendet, und wobei das besagte Ansicht umschaltende Mittel (9) die Materialien und Texturen, in Übereinstimmung mit einer Nutzerauswahl, am Anzeigeparameter beibehaltenden Mittel (5) einstellt.

14. Die Vorrichtung für die Anzeige dreidimensionaler graphischer Daten gemäß Anspruch 1, wobei die besagten dreidimensionalen graphischen Daten eine Mehrzahl von Anzeigeparametersätzen enthalten und jeder Anzeigeparametersatz mit einer eindeutigen Kennung versehen ist und das besagte Zustand speichernde Mittel (8) die besagte Kennung für jeden Anzeigeparametersatz speichert.

15. Die Vorrichtung für die Anzeige dreidimensionaler graphischer Daten gemäß Anspruch 1, wobei das besagte Zustand speichernde Mittel (8) eine Mehrzahl von dreidimensionalen graphischen Daten speichert und das besagte Ansicht umschaltende Mittel (9) im besagten dreidimensionale graphische Daten beibehaltenden Mittel (3) eines der drei im besagten Zustand speichernden Mittel (8) gespeicherten dreidimensionalen graphischen Daten einstellt.

16. Die Vorrichtung für die Anzeige dreidimensionaler graphischer Daten gemäß Anspruch 1, wobei das Zustand speichernde Mittel (8) eine Mehrzahl von dreidimensionalen Teiledaten oder eine Gruppe von Teiledaten speichert und das besagte Ansicht umschaltende Mittel (9) eines der besagten Mehrzahl von dreidimensionalen Teiledaten oder der Gruppe von Teiledaten, welche im besagten Zustand speichernden Mittel (8) gespeichert sind, verwendet, um die im besagten dreidimensionale graphische Daten beibehaltenden Mittel (3) beibehaltenen dreidimensionalen graphischen Daten zu vermehren oder teilweise zu ersetzen.

## Revendications

1. Dispositif d'affichage de données graphiques en trois dimensions (2) possédant:
des moyens de conservation de données graphiques à trois dimensions (3) servant à conserver des données graphiques à trois dimensions (2) ;
des moyens pour faire basculer la visualisation (9),
des moyens de traitement du rendu (7) pour exécuter le processus de rendu des données graphiques à trois dimensions,
des moyens de conservation des paramètres d'affichage (5)
des moyens de conservation d'état (8) pour la conservation d'une pluralité de paramètres d'affichage devant servir à l'affichage desdites données graphiques à trois dimensions (2),
sous forme d'un affichage à deux dimensions, selon lesquels chaque ensemble de pluralités de paramètres d'affichage définit un état d'affichage différent des données graphiques à trois dimensions (2);
les moyens pour faire basculer la visualisation (9) permettant à l'utilisateur de sélectionner un ensemble de paramètres d'affichage à partir desdites pluralités d'ensemble de paramètres d'affichage;
les moyens de conservation des paramètres d'affichage (5) conservent un ensemble de paramètres d'affichage sélectionnés par l'utilisateur, et
les moyens de traitement du rendu (7) traitent les données graphiques à trois dimensions (2), en utilisant ledit ensemble de paramètres d'affichage sélectionnés par l'utilisateur pour afficher le rendu des données graphiques à trois dimensions, dans un état d'affichage défini par l'ensemble des paramètres d'affichage sélectionnés par l'utilisateur, dans une fenêtre principale (23) sous forme manipulable, ce qui permet à l'utilisateur de manipuler l'état d'affichage desdites données graphiques à trois dimensions à l'écran, selon lequel la manipulation de l'état d'affichage des données graphiques à trois dimension de la fenêtre principale (23) change les valeurs dudit ensemble de paramètres d'affichage sélectionnés par l'utilisateur et conservés par lesdits moyens de conservation des paramètres d'affichage (5), **caractérisé en ce que**, dès réception d'une commande de conservation d'état en provenance de l'utilisateur, lesdits moyens de conservation d'état (8) activent les moyens de traitement du rendu (7) des données graphiques à trois dimensions ayant changé de valeurs,
et conservent le résultat de ce traitement sous forme de données d'image à deux dimensions, avec lesdits changements de valeurs dudit ensemble de paramètres d'affichage,
et lesdits moyens pour faire basculer la visualisation (9) affichent lesdites données d'image à deux dimensions dans une sous-fenêtre (25), sélectionnable par l'utilisateur.

2. Dispositif d'affichage de données graphiques à trois dimensions (2) selon la revendication 1, **caractérisé en ce que** lesdits moyens de traitement du rendu (7) exécutent aussi le processus de rendu en fonction du changement de valeurs d'un dit ensemble de paramètres d'affichage, et affichent le résultat de la réexécution du processus de rendu dans la fenêtre principale (23), reflétant ainsi la manipulation de l'état d'affichage des données graphiques à trois dimensions, effectuée par l'utilisateur.

3. Dispositif d'affichage de données graphiques à trois dimensions (2) selon l'une quelconque des revendications 1 ou 2, **caractérisé en ce que** lesdits moyens de conservation d'état (8) activent lesdits moyens de traitement du rendu (7) pour l'exécution d'une étape du processus de rendu avec des paramètres d'affichage comportant une résolution inférieure à celle du rendu des données graphiques à trois dimensions pour la génération de données à deux dimensions.

4. Dispositif d'affichage de données graphiques à trois dimensions (2) selon la revendication 1, **caractérisé en ce que** les moyens pour faire basculer la visualisation (9) peuvent générer une autre fenêtre principale (23), et afficher le résultat du processus de rendu moyennant utilisation d'un ensemble de paramètres d'affichage sélectionnés par l'utilisateur, dans ladite autre fenêtre principale (23) sous forme manipulable.

5. Dispositif d'affichage de données graphiques à trois dimensions (2) selon la revendication 1, **caractérisé en ce que** les moyens de conservation d'état (8) conservent, en un ensemble de paramètres d'affichage, tous les paramètres d'affichage nécessaires au rendu des données graphiques à trois dimensions (2).

6. Dispositif d'affichage de données graphiques à trois dimensions (2) selon l'une quelconque des revendications 1 à 3, **caractérisé en ce que** lesdits moyens de conservation d'état (8) conservent, en un ensemble de paramètres d'affichage, une partie des paramètres d'affichage nécessaire au rendu des données graphiques à trois dimensions (2).

7. Dispositif d'affichage de données graphiques à trois dimensions (2) selon l'une quelconque des revendications 1 à 6, **caractérisé en ce que** la partie des paramètres d'affichage conservés par lesdits moyens de conservation d'état (8) inclut la totalité ou une partie d'une position de visualisation et d'une direction des données graphiques à trois dimensions (2), un mode d'opération dudit dispositif d'affichage, et un système de coordination et une méthode de projection des données graphiques à trois dimensions.

8. Dispositif d'affichage de données graphiques à trois dimensions (2) selon l'une quelconque des revendications 1 à 6, **caractérisé en ce que** la partie des paramètres d'affichage conservés par lesdits moyens de conservation d'état (8) inclut la visibilité de la face, des rebords et des sommets des données graphiques à trois dimensions (2) et une balise pour indiquer une application d'élimination de ligne cachée.

9. Dispositif d'affichage de données graphiques à trois dimensions (2) selon l'une quelconque des revendications 1 à 6, **caractérisé en ce que** la partie des paramètres d'affichage conservés par lesdits moyens de conservation d'état (8) inclut une visibilité pour chacune des parties constituant les données graphiques à trois dimensions (2).

10. Dispositif d'affichage de données graphiques à trois dimensions (2) selon l'une quelconque des revendications 1 à 6, **caractérisé en ce que** la partie des paramètres d'affichage conservés par lesdits moyens de conservation d'état (8) inclut un état de sélection des parties constituant les données graphiques à trois dimensions (2).

11. Dispositif d'affichage de données graphiques à trois dimensions (2) selon l'une quelconque des revendications 1 à 6, **caractérisé en ce que** la partie des paramètres d'affichage conservés par lesdits moyens de conservation d'état (8) inclut une information relative à la position, comprenant des paramètres de mouvement, de rotation et de zooming des parties constituant les données graphiques à trois dimensions (2).

12. Dispositif d'affichage des données graphiques à trois dimensions (2) selon l'une quelconque des revendications 1 à 6, **caractérisé en ce que** la partie des paramètres d'affichage conservés par lesdits moyens de conservation d'état (8) inclut une balise pour les coupes transversales, avec position et direction du plan de coupe transversale.

13. Dispositif d'affichage des données graphiques à trois dimensions selon l'une quelconque des revendications 1 à 6, **caractérisé en ce que** la partie des paramètres d'affichage conservés par lesdits moyens de conservation d'état (8) inclut des matériaux et des textures qui affichent les couleurs et les motifs d'une surface de données graphiques à trois dimensions, et se servant des matériaux et textures sous forme de données à deux dimensions conservées par les moyens de conservation d'état (8), et **caractérisé en ce que** lesdits moyens de faire basculer la visualisation (9) fixent, conformément à la sélection de l'utilisateur, les matériaux et textures par les moyens de conservation des paramètres d'affichage (5).

14. Dispositif d'affichage des données graphiques à trois dimensions selon la revendication 1, **caractérisé en ce que** les données graphiques à trois dimensions contiennent une pluralité d'ensembles de paramètres d'affichage, et un identificateur unique rattaché à chaque ensemble de paramètres d'affichage, et lesdits moyens de conservation d'état (8) sauvegardent ledit identificateur de chacun des ensembles de paramètres d'affichage.

15. Dispositif d'affichage des données graphiques à trois dimensions selon la revendication 1, **caractérisé en ce que** les moyens de conservation d'état (8), conservent une pluralité de parties de donnés graphiques à trois dimensions, et lesdits moyens de faire basculer la visualisation (9) fixent, par lesdits moyens de conservation des données graphiques à trois dimensions (3), une des parties de données graphiques à trois dimensions sauvegardées par les moyens de conservation d'état (8).

16. Dispositif d'affichage de données graphiques à trois dimensions selon la revendication 1, **caractérisé en ce que** les moyens de conservation d'état (8), conservent une pluralité de parties de donnés graphiques à trois dimensions ou un groupe de parties de données, et lesdits moyens de faire basculer la visualisation (9) utilisent une des parties de données graphiques à trois dimensions, ou un groupe de parties de données, sauvegardées par les moyens de conservation d'état (8), pour l'additionner à , ou pour remplacer une partie des données graphiques à trois dimensions conservées par lesdits moyens de conservation des données graphiques à trois dimensions (3).
